# EUROPEAN PATENT APPLICATION

(11) **EP 4 685 100 A1**
(43) Date of publication of application: **28.01.2026**
(21) Application number: 25191102.0
(22) Date of filing: 22.07.2025
(51) Int. Cl.: B66F 9/075, H01M 10/625, H01M 50/60

(54) **INDUSTRIAL TRUCK WITH A CONVEYING SYSTEM OF A COOLING FLUID TO THE BATTERY SYSTEM**

(30) Priority: 26.07.2024 IT 202400017494
(71) Applicant: Toyota Material Handling Manufacturing Italy S.p.A, 40132 Bologna (IT)
(72) Inventor: MASTROIANNI, Francesco, Bologna (IT)
(74) Representative: Hoffmann Eitle

(57) **Abstract**

An electrically powered industrial truck (10) comprising a frame (20) inside which there is a seat (70) intended to house an energy storage system (11), characterized in that it comprises a system for conveying (14, 16, 30, 31) a cooling fluid configured to convey the cooling fluid from outside the industrial truck to the energy storage system (11). (Fig. 1)

## Description

### Field of the invention

The present disclosure relates to an electrically powered industrial truck that allows to facilitate extinguishing a fire in an electric battery.

### Technical background

It is known in the art to make industrial trucks, to be used for example at industrial sites, ports, warehouses or the like. The industrial trucks can include material handling means, such as a fork, a gripper or another device for picking up a load, for example a pallet, a reel or any other known type of load. A very widespread type of industrial truck is the forklift truck.

In recent years, electrically powered industrial trucks have become widespread, powered for example by a lithium battery mounted on the truck. One of the most perceived problems in this type of truck is the risk of battery fire, since if a lithium-ion battery catches fire or overheats, a very high amount of water is needed to cool the battery and stop the fire. The procedure for extinguishing the fire and/or cooling the battery, in addition to requiring a great deal of water (which may not be available in certain areas), also requires very long intervention times by fire-fighters or other specialized operators.

Systems for preventing and reducing the risk of fire through software-implemented logic are known, but there are no effective systems that can mitigate the risk and facilitate the management of the industrial truck in the rare cases in which the electric battery catches fire or overheats.

### Summary of the invention

An object of the present disclosure is to provide an electrically powered industrial truck capable of solving one or more of the problems described above.

In light of the above, the present disclosure proposes an electrically powered industrial truck comprising a frame inside which there is a seat intended to house an energy storage system, characterised in that it comprises a system for conveying a cooling fluid configured to convey the cooling fluid from outside the industrial truck to the energy storage system.

Preferably, said conveying system comprises a first inlet port configured to convey the cooling fluid from outside the industrial truck to the inside of the seat.

Preferably, the conveying system comprises a first inlet port that is formed on the frame and/or a body of the industrial truck, and is configured to be coupled to a connection of a fire hose, said inlet port being preferably configured to convey the cooling fluid from outside the industrial truck (in particular from the fire hose) to the inside of the seat.

Preferably, the energy storage system comprises an outer casing (also called a "box") and a battery system which is positioned inside the outer casing, where the outer casing of the energy storage system includes a second inlet port configured to allow the entry of cooling fluid into the outer casing, where the conveying system is configured to convey cooling fluid from outside the industrial truck to the inside of the outer casing of the energy storage system.

Preferably, the second inlet port of the outer casing is configured to allow the entry of cooling fluid inside the outer casing only when it is subjected to a pressure exceeding a predetermined threshold.

Preferably, the outer casing includes a cooling fluid outlet port, preferably provided with a one-way valve so as to allow cooling fluid to flow out from the outer casing.

Preferably, the system for conveying the cooling fluid comprises a conveying channel configured to convey cooling fluid from the first inlet port to the energy storage system. For example, the conveying channel could be made by means of a tube provided at one end with a connection configured to be coupled with the first inlet port.

Preferably, the conveying channel is configured to convey cooling fluid from the first inlet port to the second inlet port. For example, the conveying channel could be made by means of a tube provided at the ends with respective connections configured to couple with the first inlet port and the second inlet port. In this case, the conveying channel could be made with a fire hose.

Preferably, the conveying system includes a third cooling fluid inlet port formed on a frame or a body of the industrial truck configured to convey cooling fluid from outside the industrial truck to the energy storage system.

According to an embodiment, the conveying system is configured to convey cooling fluid from outside the industrial truck to inside the outer casing of the energy storage system.

In an embodiment, an energy storage system for an industrial truck is provided, comprising a battery system and an outer casing inside which the battery system is placed; wherein the outer casing comprises an inlet port to allow the entry of a cooling fluid from the outside to the inside of the outer casing.

Preferably, the outer casing is sealed so as to be impermeable to liquids in a normal operating condition, wherein the inlet port is configured to be closed and impermeable to liquids in the normal operating condition; said inlet port being configured to open and allow cooling fluid to flow to the inside of the outer casing when subjected to a pressure from the outside of the outer casing exceeding a predetermined threshold.

Thanks to the industrial truck according to the present disclosure it is possible to mitigate the risks associated with a fire of the energy storage system. In fact, the present disclosure has facilitated the management of fire and/or overheating of the battery of the forklift truck, making the operations of cooling the battery and/or extinguishing a fire easier, faster and more effective, with a considerable saving of the water necessary for the intervention.

### Brief description of the drawings

The present disclosure will be illustrated with reference to exemplary embodiments described with reference to the accompanying drawings.

In the drawings:
- Figure 1 illustrates a view of an industrial truck according to the present disclosure;
- Figure 2 illustrates a schematic view of a frame of the industrial truck and energy storage system;
- Figures 3 and 4 illustrate views of an energy storage system according to an alternative embodiment;
- Figure 5 illustrates an embodiment of a cooling fluid inlet port;
- Figure 6 illustrates a one-way valve that can be used at the inlet and outlet ports of the system for conveying the cooling fluid.

### Detailed description

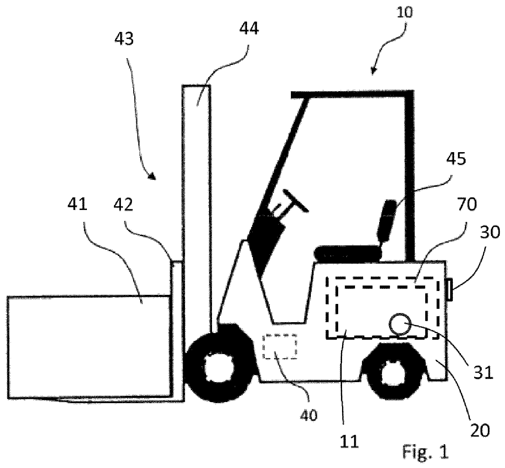

With reference to the figures, an industrial truck 10 is shown in Figure 1.

The industrial truck 10 can be used in an industrial site, a port, a warehouse or the like. The industrial truck can be used to handle a load 41. For this purpose, the industrial truck 10 can include material handling means 43. For example, the industrial truck 10 can be a forklift truck, preferably a counterbalanced forklift truck. The forklift truck 10 can include an upright 44 on which a material handling device 42, for example a fork, can slide. Other types of material handling devices can also be used, such as a gripper, a strut, a slab material handling device or other. The industrial truck 10 preferably includes a cab for a driver. The industrial truck preferably includes a seat 45 for the user of the industrial truck. The industrial truck 10 preferably includes a controller 40, capable of controlling the functions of locomotion and material handling. The industrial truck 10 includes a frame 20. The industrial truck 10 can for example include three or four wheels, but other configurations are also possible according to the prior art. The industrial truck 10 can include a front axle and a rear axle as shown in Figure 1.

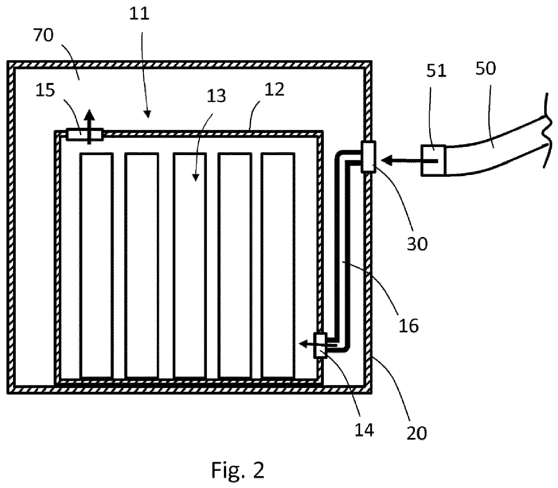

The industrial truck 10 is electrically powered and comprises a storage system (or storage) of electrical energy 11, such as an electric battery, an assembly of electric batteries or a battery pack made according to any known technique. The electrical energy storage system 11 is located inside the frame 20 of the industrial truck 10; in an example, the electrical energy storage system 11 is located below, at least in part, a driver's station, as shown in Figure 1. The electrical energy storage system 11 is positioned in a seat 70 (or battery compartment, or battery-holder compartment) in the frame 20. The seat 70 is preferably substantially closed so as to prevent the entry of water into the seat 70 during normal operation of the industrial truck. Preferably, the seat 70 is shaped so as to allow the ventilation of the energy storage system 11 received in the seat 70. The electrical energy storage system 11 can preferably comprise a lithium (or lithium-ion) battery. However, other types of batteries can also be used according to known techniques, such as lead-acid, nickel-metal hydride or nickel-metal hydride batteries. Preferably, the energy storage system 11 comprises an outer casing 12 and a battery system 13 placed inside the outer casing 12 (shown in Figure 2). The battery system 13 can include one or more battery modules, or one or more battery packs according to known techniques. Preferably, the electrical energy storage system 11 is configured to supply electric power to a locomotion system of the industrial truck and/or the material handling system of the industrial truck. Preferably, the locomotion system of the industrial truck 10 includes one or more electric motors (not shown in the figures); preferably the material handling system includes one or more electric drives, hydraulic drive systems, an electrically driven hydraulic pump, linear electric drives or other types of drives according to the known techniques in the field. The energy storage system 11 could be removable from the industrial truck 10, for example to allow the replacement of the discharged battery with a pre-charged battery; in this case, the frame could include an opening for the removal/insertion of the energy storage system, for example on a side of the industrial truck; alternatively, the energy storage system could also not be removable from the industrial truck, i.e. be integrated in the frame in a fixed manner.

The industrial truck 10 can be fully electrically powered by means of the electrical energy storage system 11, but could also be of the hybrid type, i.e. of the type comprising a combustion engine in addition to the electrical energy storage system 11.

The industrial truck 10 comprises a system for conveying 14, 16, 30, 31 a cooling fluid (for example water, but also other known cooling fluids can be used) configured to convey the cooling fluid from outside the industrial truck 10 to the energy storage system 11. Preferably, the system for conveying the cooling fluid is configured to convey the cooling fluid from outside the industrial truck 10 inside the seat (or battery compartment) 70 of the industrial truck where the energy storage system 11 is housed (or received).

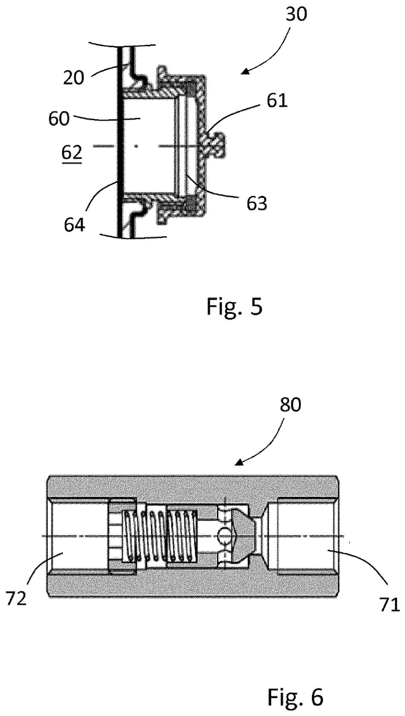

In an embodiment according to what is depicted in Figure 2, the system for conveying the cooling fluid includes at least one inlet port 30 to allow the entry of cooling fluid from outside the industrial truck 10 to inside the industrial truck, preferably inside the compartment 70 in which the energy storage system 11 is received. The inlet port 30 is advantageously formed on the frame 20 and/or on an outer body of the industrial truck (if present, not depicted in Figure 2). The inlet port 30 is preferably formed at the opening in the frame 20. The inlet port 30 is preferably formed so as to be able to be coupled with a connection 51 of a fire hose 50. "Fire hose" is intended herein as any tube provided with a connection and adapted to transport a coolant. For example, as shown in Figure 5, the inlet port 30 can be formed with a tubular body 60 mounted at an opening in the frame 20, in particular on a portion of the frame 20 that forms a wall of the seat 70 (or battery-holder compartment 70). The tubular body 60 can include an open end 63 facing the outside of the industrial truck 10 and an open end 64 facing the inside 62 of the frame 20 (note that the inside 62 can correspond in an embodiment to the compartment 70 of the energy storage system 11). The end 63 of the inlet port 30 can be configured to be closed by means of a cap 61; for this purpose, the end 63 can for example be provided with a thread to receive the closing cap 61 in screwing. During normal operation of the industrial truck, the inlet port 30 can be closed by means of the cap 61. In the event of fire, the cap 61 can be unscrewed and the connection 51 of the fire hose 50 can be engaged in the tubular body 60 of the inlet port by means of any known technique, for example by interlocking or screwing depending on the type of connection 51 used. The connection used 51 and, consequently, the configuration to allow the coupling between the inlet port 30 and the connection 51 can be made according to any known standard or norm in use in different countries.

In an embodiment according to what is shown in Figure 2, the energy storage system 11 comprises an outer casing 12 and a battery system 13 placed inside the outer casing 12. The outer casing 12 could be made for example with a box-like shape, for example in the shape of a parallelepiped. The outer casing 12 could be made of metal sheet, for example with a plurality of metal sheets welded together.

Preferably, as shown in Figure 2, the outer casing 12 can include a second inlet port 14 configured to allow the entry of cooling fluid in the outer casing 12. The second inlet port 14 of the outer casing 12 is configured to allow the entry of cooling fluid inside the outer casing 12 only when it is subjected to a pressure exceeding a predetermined threshold. The second inlet port 14 can be configured to couple to a connection of a fire hose or, more in general, to a connection of a tube that conveys cooling liquid. For example, a one-way valve 80 of the type with a check spring shown in Figure 6 can be mounted at the inlet port 14, with the fluid inlet opening 71 facing the outside of the outer casing 12 and the fluid outlet opening 72 facing the inside of the outer casing 12.

The conveying system, according to a preferred embodiment, is configured to convey cooling fluid from outside the industrial truck 10 to inside the outer casing 12 of the energy storage system 11. For this purpose, according to an example, the system for conveying the cooling fluid comprises a conveying channel 16 configured to convey cooling fluid from the first inlet port 30 to the second inlet port 14, as depicted in Figure 2. The conveying channel 16 can be made with a tube, for example a hose provided with connections to be coupled to the first and second inlet ports 30 and 14.

Alternatively, the system for conveying the cooling fluid could also include a conveying channel that is not connected to the inlet port 14 of the outer casing 12; in fact, the inlet port 14 could also not be present. In such a case, the inlet channel can still be present to conduct the cooling fluid from the inlet port 30 to a preferred position of the outer surface of the energy storage system 11, for example in a central position of the upper surface of the outer casing 12 of the energy storage system. However, the conveying channel could also be completely absent and the conveying system could also work thanks to only the inlet port 30 which allows to fill the seat 70 with cooling fluid. Advantageously, in this case, the seat 70 of the energy storage system could be closed below so as to allow the accumulation of cooling fluid up to a height that allows to at least partially surround the energy storage system 11 in the battery-holder compartment 70. The presence of the conveying channel 16 can however allow to improve the cooling, bringing the cooling liquid either inside the energy storage system or to the points that allow a better cooling.

Preferably, as shown in Figure 2, the outer casing 12 includes a cooling fluid outlet port 15; the outlet port 15 is preferably provided with a one-way valve such as to allow the cooling fluid to flow out from the outer casing 12, made for example with a valve of the type depicted in Figure 6, with the liquid inlet 71 mounted so as to be in communication with the inside of the outer casing 12 and the liquid outlet 72 mounted so as to be in communication with the outside of the casing 12. The one-way valve allows to avoid the onset of overpressures inside the outer casing 12. Such a one-way valve can also be used to evacuate gases generated during an overheating or the onset of a fire inside the box 12. The inlet port 15 can be made with an overpressure vent mounted on the outer casing 12.

Preferably, the outlet port 15 is mounted on the outer casing 12 at a distant position from the inlet port 14, preferably on an opposite side or a different face of the box-like body forming the outer casing 12.

For example, the inlet port 14 could be positioned at a side of the casing 12 and the outlet port 15 could be positioned on an upper face of the casing 12, preferably near a side opposite to that on which the inlet port 14 is mounted. Preferably, the inlet port 14 is positioned near a lower face of the outer casing 12. This allows to have an optimal conveying path inside the casing 12 and to cool every part of the energy storage system 11. In a preferred embodiment, the inlet port 14 is configured to allow the entry of cooling fluid inside the outer casing 12 when it is subjected to a pressure exceeding a predetermined threshold, equal for example to a threshold higher than atmospheric pressure. In a normal operating condition (for example in the absence of a pressure higher than atmospheric pressure), the inlet port 14 is closed and does not allow the entry of liquids inside the casing 12.

As shown in Figure 1, the system for conveying the cooling fluid can also include a third cooling fluid inlet port 31 formed on a frame 20 or a body of the industrial truck configured to convey cooling fluid from outside the industrial truck to the energy storage system 11. The third inlet port 31 can be made in a manner similar or identical to the inlet port 30 depicted in Figure 5. The third inlet port 31 could be configured to allow the cooling fluid to enter the seat 70 so that the cooling fluid can externally surround the energy storage system 11; alternatively, the third inlet port 31 could be connected to an inlet port formed on the outer casing 12 of the storage system to conduct the cooling fluid inside the outer casing, in a manner analogous to that described above with reference to Figure 2, for example by means of a respective conveying channel. A greater number of inlet ports could also be provided on the frame 20, to increase the cooling efficiency by increasing the overall flow rate of the cooling fluid. According to an embodiment, an inlet port could also be positioned at the counterweight of a counterbalanced forklift truck; in this case, a cooling fluid conveying channel can advantageously pass through the counterweight to reach the battery-holder compartment 70.

The connections between the inlet ports 30, 31 (but also 14) and the connection of a fire hose can advantageously be made with quick connectors of the type normally used for fire hoses.

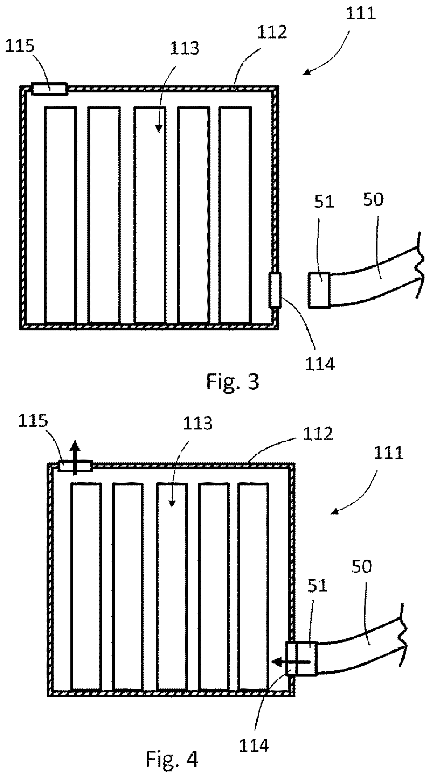

According to an embodiment as depicted in Figure 3 and 4, an energy storage system 111 is provided for an industrial truck, comprising a battery system 113 and an outer casing 112 inside which the battery system is placed. The outer casing 112 comprises an inlet port 114 for allowing the entry of a cooling fluid from the outside to the inside of the outer casing 112. The inlet port 114 can be made in a manner analogous to the inlet port 30, for example according to Figure 5. Preferably, the outer casing 112 is sealed so as to be impermeable to liquids in a normal operating condition. The inlet port 114 is configured to be closed and impermeable to liquids in the normal operating condition. The inlet port 114 can also be configured to open and allow the passage of cooling fluid to the inside of the outer casing 112 when subjected to a pressure exceeding a predetermined threshold. The position of the inlet port 114 and the outlet port 115 can be analogous to that described above with reference to Figure 2. Figure 3 shows the fire hose 50 and the relative connection 51 in a position not connected to the inlet port 114; Figure 4 shows the fire hose 50 and the relative connection 51 in a position connected to the inlet port 114. The arrows in Figure 4 (as well as in Figure 2) show the flow direction of the cooling fluid coming from the fire hose 50 and passing through the energy storage system 11, 111 to the outlet port 115. In the embodiment of Figures 3 and 4, the energy storage system 111 can be effectively cooled even when it is not mounted on the industrial truck 10, for example in a transport step of the energy storage system or during its storage in a warehouse. In each or some of the inlet and outlet ports 14, 15, 30, 31, 114, 115 described above, a valve system (for example of the type shown in Figure 6) can be integrated that allows the passage of fluid only when a certain pressure is reached and/or only in one direction. Each of the inlet ports described above can include means for connecting to a connector of a tube capable of allowing the passage of high pressure fluid. The energy storage system 111 shown in Figure 3-4 can include all or part of the features described above for the system 11. The energy storage system 111 can be provided separately from an industrial truck.

The system for conveying the cooling fluid described above could also be used in an electrically powered vehicle other than an industrial truck.

Thanks to the present disclosure, it is possible to quickly and effectively cool the battery system of an industrial truck and it is possible to mitigate the risk associated with a possible fire of the battery of an industrial truck. It is possible to extinguish the fire of a battery quickly by using a vastly smaller amount of water with respect to the prior art, thanks to the fact that the water is brought and maintained where it is most necessary for the action of cooling or extinguishing the fire. This allows not only to reduce the intervention times of fire-fighters, but also to make it possible to extinguish the fire even in areas with little water available. The disclosure therefore leads to considerable water savings, which is particularly advantageous in areas where water is scarce and where the risk of fire may be greater.

## Claims

1. An electrically powered industrial truck (10) comprising a frame (20) inside which there is a seat (70) intended to house an energy storage system (11), **characterized in that** it comprises a system for conveying (14, 16, 30, 31) a cooling fluid configured to convey the cooling fluid from outside the industrial truck to the energy storage system (11).

2. An industrial truck according to claim 1, wherein said conveying system comprises a first inlet port (30) configured to convey the cooling fluid from outside the industrial truck to the inside of the seat (70).

3. An industrial truck according to claim 1, wherein the conveying system comprises a first inlet port that is formed on the frame (20) and/or a body of the industrial truck, wherein said inlet port is configured to be coupled to a connection (51) of a fire hose (50).

4. An industrial truck according to claim 1, wherein said inlet port (30) is configured to convey the cooling fluid from outside the industrial truck to the inside of the seat (70).

5. An industrial truck according to one or more of the preceding claims, wherein the energy storage system (11) comprises an outer casing (12) and a battery system (13) which is positioned inside the outer casing (12), wherein the outer casing (12) of the energy storage system includes a second inlet port (14) configured to allow the entry of cooling fluid into the outer casing (12), wherein the conveying system (14, 16, 30, 31) is configured to convey cooling fluid from outside the industrial truck (10) to the inside of the outer casing (12) of the energy storage system (11) through the second inlet port (14).

6. An industrial truck according to claim 5, wherein the second inlet port (14) of the outer casing (12) is configured to allow the entry of cooling fluid inside the outer casing (12) only when subjected to a pressure exceeding a predetermined threshold.

7. An industrial truck according to one or more of claims 5-6, wherein the outer casing (12) includes a cooling fluid outlet port (15) preferably provided with a one-way valve so as to allow cooling fluid to flow out from the outer casing (12).

8. An industrial truck according to one of preceding claims 2 to 7, wherein the system for conveying a cooling fluid comprises a conveying channel (16) configured to convey cooling fluid from the first inlet port (30) to the energy storage system (11).

9. An industrial truck according to claims 5 and 8, wherein the conveying channel (16) is configured to convey cooling fluid from the first inlet port (30) to the second inlet port (14).

10. An industrial truck according to one of claims 2 to 9, wherein the conveying system (14, 16, 30, 31) includes a third inlet port (31) of a cooling fluid formed on a frame (20) or body of the industrial truck and configured to convey cooling fluid from outside the industrial truck to the energy storage system (11).

11. An energy storage system (11) for an industrial truck, comprising a battery system (13) and an outer casing (12) inside which the battery system is placed; **characterized in that** the outer casing comprises an inlet port (14) to allow the entry of a cooling fluid from the outside to the inside of the outer casing (12).

12. An energy storage system according to claim 11, wherein said inlet port is configured to couple with a connection (51) of a fire hose (50).

13. An energy storage system according to claim 11, wherein the outer casing (12) is sealed so as to be impermeable to liquids in a normal operating condition, wherein the inlet port (14) is configured to be closed and impermeable to liquids in the normal operating condition; said inlet port (14) being configured to open and allow cooling fluid to flow to the inside of the outer casing (12) when subjected to a pressure exceeding a predetermined threshold.
